# EUROPEAN PATENT APPLICATION

(11) **EP 1 467 458 A2**
(43) Date of publication of application: **13.10.2004**
(21) Application number: 04425183.3
(22) Date of filing: 17.03.2004
(51) Int. Cl.: H02G 15/007, G02B 6/44

(54) **Locking apparatus, especially for electric cables, cords or ropes**

(30) Priority: 07.04.2003 IT FI20030092
(71) Applicant: VERDA s.r.l., 50141 Firenze (IT)
(72) Inventor: Pini, Belisario, 50141 Firenze (IT)
(74) Representative: Martini, Lazzaro

(57) **Abstract**

Apparatus for locking a plurality of wires (5) characterized in that it comprises a plurality of tubular elements (1, 2, 3) each of which exhibits a central longitudinal passage (10, 20, 30), the said elements cooperating with each other to define a labyrinth-like passage for the wires (5) to be locked: the said elements (1, 2, 3) being able to be cascade-fitted one inside the other.

## Description

The present invention refers to a locking apparatus especially, although not exclusively, for electric cables of the type having a silicone sheath and fabric core, that is, a core made up of a plurality of resistant, non-conductive wires.

More particularly, the present apparatus, as defined in claim 1 and in the independent claims, prevents the wires of the inner core from stretching whenever the cable is subjected to a strong tension, it is safe, easy to fabricate, cost-effective and reliable even after a prolonged service life.

These and other advantages and characteristics of the invention will be best understood by anyone skilled in the art from a reading of the following description in conjunction with the attached drawings given as a practical exemplification of the invention, but not to be considered in a limitative sense, wherein:
- Figs. 1-3 show an apparatus according to the invention before, during and after the locking;

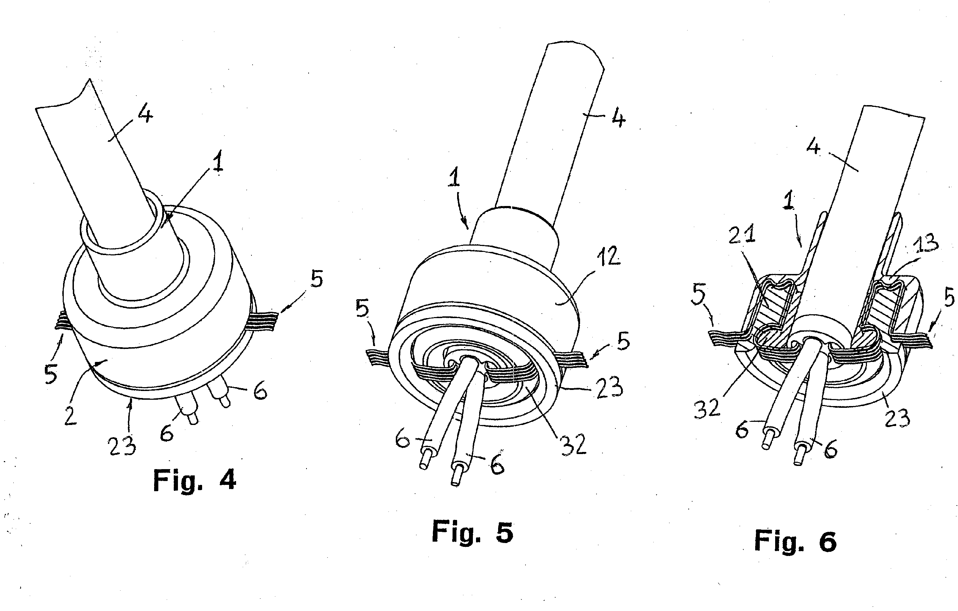

- Figs. 4 and 5 are two different perspective views of the apparatus of Fig. 3; and
- Fig. 6 is a perspective section view of the apparatus of Fig. 3.

Reduced to its basic structure, and reference being made to the figures of the attached drawings, an apparatus according to the invention comprises a plurality of tubular elements (1, 2, 3) each of which exhibits a central longitudinal passage (10, 20, 30) for the sheath (4) of an electrical cable, the said elements cooperating with each other to define a labyrinth-like passage for the wires (5) of the core of the cable: the said elements (1, 2, 3) being able to be cascade-fitted one inside the other.

According to the example illustrated in the drawings, the said elements (1, 2, 3) are in number of three. The first (1) of them has a top portion (11) of smaller diameter and a bottom portion (12) of larger diameter which, in proximity of the portion (11) of smaller diameter, exhibits an inner annular appendix (13). The second element (2) has a portion (21) to be inserted into the bottom portion of larger diameter (12) of the first element (1), and is provided with an annular recess (22), into which the annular appendix (13) of the first element (1) is inserted, and with a lower, annular, peripheral step (23). The third element (3) exhibits a portion (31) intended for insertion into the longitudinal passage (20) of the second element (2) and an annular edge (32) to be matched with a corresponding recess (23) provided in the second element (2).

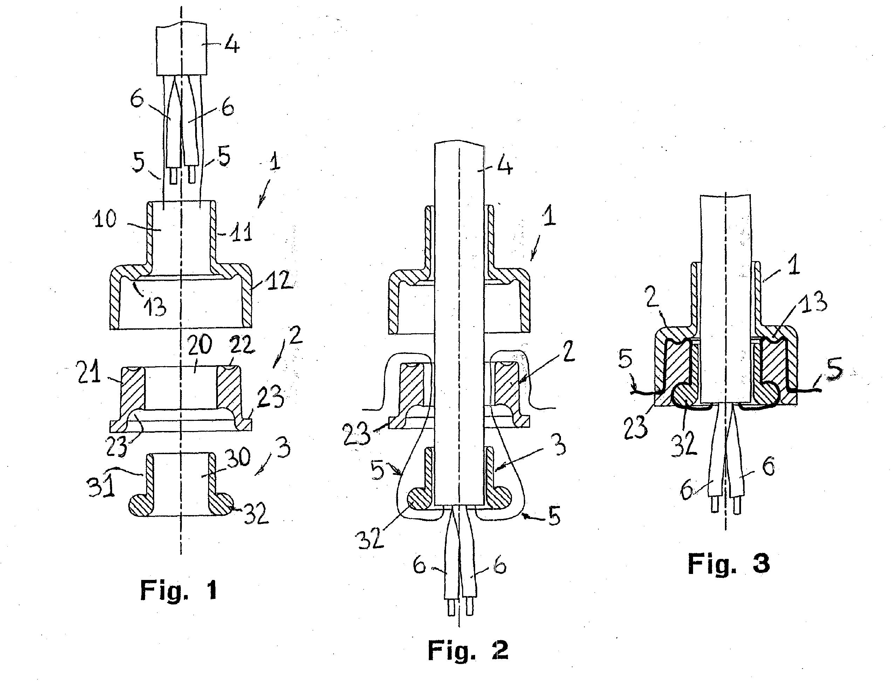

The assembly of the apparatus is performed as follows. The cable is passed through the elements (1, 2, 3) so that both the wires (5) and the leads (6) will result outside and beyond the third element (3), as shown in Fig. 1. Afterwards, the wires (5) of the core are introduced through the opening (20) of the second element, as shown in Fig. 2, so as to pass over the edge (32) of the third element (3) and the step (23) of the second element (2). Then, while exerting, by one hand, a slight pull on the cable's sheath (4), the third element (3) is made, by the other hand, to slide inside the second element (2) and then the first element (1) is disposed on the latter. The results is a perfect locking of the wires (5) in the labyrinth made up of the surfaces of the three elements (1, 2, 3) .

The same apparatus can be used likewise, and with as many advantages, also for retaining the strands of end sections of cords and ropes.

## Claims

1. Apparatus for locking a plurality of wires (5) **characterized in that** it comprises a plurality of tubular elements (1, 2, 3) each of which exhibits a central longitudinal passage (10, 20, 30), the said elements cooperating with each other to define a labyrinth-like passage for the wires (5) to be locked: the said elements (1, 2, 3) being able to be cascade-fitted one inside the other.

2. Apparatus according to claim 1, **characterized in that** the said wires (5) are resistant, non-conductive wires of an electric cable.

3. Apparatus according to claim 1, **characterized in that** the said wires (5) are wires or strands of a cord or rope.

4. Apparatus according to claim 1, **characterized in that** the said elements (1, 2, 3) are in number of three, the first (1) of them having a top portion (11) of smaller diameter and a bottom portion (12) of larger diameter which, in proximity of the portion (11) of smaller diameter, has an inner annular appendix (13), the second element (2) having a portion (21) to be inserted into the bottom portion of larger diameter (12) of the first element (1), and being provided with an annular recess (22), into which the annular appendix (13) of the first element (1) is inserted, and with a lower, annular, peripheral step (23), the third element (3) exhibiting a portion (31) intended for insertion into the longitudinal passage (20) of the second element (2) and an annular edge (32) to be matched with a corresponding recess (23) provided in the second element (2).
